# EUROPEAN PATENT SPECIFICATION

(11) **EP 2 838 933 B1**
(45) Date of publication and mention of the grant of the patent: **04.07.2018**
(21) Application number: 13718723.3
(22) Date of filing: 12.04.2013
(51) Int. Cl.: C08G 63/181, A45D 34/00, C08L 67/02

(54) **PLASTIC BOTTLES FOR PERFUME COMPOSITIONS HAVING IMPROVED CRAZING RESISTANCE**
KUNSTSTOFFFLASCHEN FÜR PARFÜMZUSAMMENSETZUNGEN MIT VERBESSERTER RISSBILDUNGSBESTÄNDIGKEIT
BOUTEILLES EN PLASTIQUE POUR COMPOSITIONS DE PARFUM AYANT UNE RÉSISTANCE AU FAÏENÇAGE AMÉLIORÉE

(30) Priority: 16.04.2012 US 201261624586 P; 14.03.2013 US 201313804574; 14.03.2013 US 201313804672
(43) Date of publication of application: 25.02.2015
(73) Proprietor: The Procter & Gamble Company, Cincinnati, OH 45202 (US)
(72) Inventor: COLLIAS, Dimitris, Ioannis, Cincinnati, OH 45201 (US); KELLETT, Patti, Jean, Cincinnati, OH 45201 (US)
(74) Representative: Kremer, Véronique Marie Joséphine
(86) International application number: PCT/US2013/036298
(87) International publication number: WO 2013/158477

(56) References cited:
- WO-A1-2007/052847
- DATABASE WPI Week 200901 Thomson Scientific, London, GB; AN 2009-A17075 XP002700059, -& JP 2008 291244 A (MITSUBISHI CHEM CORP) 4 December 2008 (2008-12-04)

## Description

### FIELD OF THE INVENTION

The present invention relates to plastic bottles containing perfume compositions. The plastic bottles comprise poly(ethylene 2,5-furandicarboxylate) (PEF) and have improved crazing resistance, which reduces the likelihood of cracking of the bottles and increases their lifetime.

### BACKGROUND OF THE INVENTION

Plastic bottles containing perfume compositions have been proposed as an alternative to glass bottles. Plastic bottles would give manufacturers increased freedom in developing unique shapes and lowering manufacturing costs. JP 2008 291244 A discloses the use of poly(ethylene 2,5-furandicarboxylate) (PEF) for providing plastic bottles and plastic containers for e.g. cosmetic compositions. Poly(ethylene terephthalate) (PET) has been suggested as a useful plastic material for perfume bottles, since it is clear and can be recycled. However, limonene and other perfume raw materials (prms) can diffuse into PET and lower its crazing initiation stress. As a result of that, these perfumes can cause crazing of PET in areas where the tensile stresses, due to the presence of the perfumes, exceed the crazing initiation stress. Also, crazing is more predominant in amorphous areas rather than crystalline and stretched areas, where the PET molecules are more aligned and diffusivity of the perfumes is lower. This crazing of PET can progress into cracking (particularly at higher strains) and cause integrity problems in perfume bottles, and thus reduce their lifetime.

Therefore, a need still exists for a plastic bottle for perfume compositions that can be formed from a recyclable plastic material that has better resistance to crazing and cracking than PET.

### SUMMARY OF THE INVENTION

The invention provides a plastic bottle containing a perfume composition, in accordance with the claims.

### DETAILED DESCRIPTION OF THE INVENTION

### I Definitions

As used herein, the term "plastic" refers to any synthetic or organic material that can be molded or shaped, generally when heated, and then hardened into a desired form including, but not limited to, polymer, resin, and cellulose derivative.

As used herein, the term "other polymer materials" refers to polymer materials other than PEF. Non-limiting examples of other polymer materials are PET; polyester; polyamide (PA); polycarbonate (PC); polyoxymethylene (POM); polyacrylonitrile (PAN); polyolefin; polyethylene (PE); polypropylene (PP); fluoropolymer; poly(butylene succinate) (PBS); virgin, recycled and regrind versions of the other polymer materials; bio-based and petroleum-based versions of the other polymer materials; and mixtures thereof.

As used herein, the term "bio-based material" refers to a renewable material.

As used herein, the term "renewable material" refers to a material that is produced from a renewable resource.

As used herein, the term "renewable resource" refers to a resource that is produced via a natural process at a rate comparable to its rate of consumption (e.g., within a 100 year time frame). The resource can be replenished naturally, or via agricultural techniques. Non limiting examples of renewable resources include plants (e.g., sugar cane, beets, corn, potatoes, citrus fruit, woody plants, lignocellulose, hemicellulose, cellulosic waste), animals, fish, bacteria, fungi, and forestry products. These resources can be naturally occurring, hybrids, or genetically engineered organisms. Natural resources, such as crude oil, coal, natural gas, and peat, which take longer than 100 years to form, are not considered renewable resources. Because at least part of the material of the invention is derived from a renewable resource, which can sequester carbon dioxide, use of the material can reduce global warming potential and fossil fuel consumption.

As used herein, the term "bio-based content" refers to the amount of carbon from a renewable resource in a material as a percent of the weight (mass) of the total organic carbon in the material, as determined by ASTM D6866-10 Method B.

As used herein, the term "petroleum-based" material refers to a material that is produced from fossil material, such as petroleum, natural gas, coal, etc.

### II Plastic Bottles

Unexpectedly, it has been found that plastic bottles made with PEF, either homopolymer or copolymer, have better crazing and cracking resistance to perfumes than PET or other polymer materials. While not wishing to be bound by theory, the better crazing and cracking properties of PEF vs. PET with respect to perfumes may be due to the higher polarity of the oxygen-containing aromatic furan ring compared to the analogous all-hydrocarbon aromatic ring of terephthalic acid, and to the higher crystallinity of PEF than PET. These differences between PEF and PET may alter the interactions between PEF and perfumes so as to reduce or even eliminate the crazing in a PEF bottle.

PEF is produced by a condensation reaction of furan-1,4-dicarboxylic acid (FDCA) and ethylene glycol (EG; also called monoethylene glycol or MEG), analogous to the condensation reaction between EG and terephthalic acid used to make PET. FDCA can be prepared from sugar by the acid dehydration to form hydroxymethylfurfural (HMF) or its derivatives. These derivatives can then be oxidized to FDCA. Ethylene glycol can be derived conventionally from petroleum resources leading to a partially-renewable PEF (75% of carbons renewably sourced) or ethylene glycol can also be sourced from sugar from plants to give a fully renewable PEF (100% of carbons renewably sourced). Sugar-sourced EG can be made by fermenting the sugar to give ethanol, dehydrating the ethanol to give bio-ethylene, oxidizing the bio-ethylene to give bio-ethylene oxide, and hydrolyzing the bio-ethylene oxide to give bio-EG.

Non-limiting examples of other polymer materials useful in the present invention are PET; polyester; polyamide (PA); polycarbonate (PC); polyoxymethylene (POM); polyacrylonitrile (PAN); polyolefin; polyethylene (PE); polypropylene (PP); fluoropolymer; poly(butylene succinate) (PBS); virgin, recycled, and regrind versions of the other polymer materials; bio-based and petroleum-based versions of the other polymer materials; and mixtures thereof. The bio-based versions of the other polymer materials can be either partially or fully bio-based polymers. The recycled or regrind versions of the other polymer materials are either collected from a consumer recycling plant, typically called PCR, or an industrial recycling source, typically called PIR.

In one embodiment, the plastic bottle comprises a monolayer PEF. Monolayer PEF is more resistant than PET to perfumes, such as limonene, and other perfume raw materials (prms). In addition, monolayer PEF is able to meet the perfume loss specification across the necessary shelf lifetime for the plastic bottle, whereas PET alone cannot.

In another embodiment, the plastic bottle comprises multiple layers of other polymer materials. The multiple layers will produce further improvements to crazing resistance and increase the bottle lifetime. In another embodiment, the plastic bottle comprises multiple layers of other polymer materials, wherein one or more layers comprise PEF. In yet another embodiment, the plastic bottle comprises multiple layers of other polymer materials, wherein the inside layer comprises PEF. This ensures higher crazing resistance in the areas under tensile stress. In one embodiment, the plastic bottle comprises multiple layers of other polymer materials, wherein one or more layers comprise PEF, and wherein the other layers comprise the other polymer materials.

In one embodiment, the plastic bottle comprises multiple layers of polymer materials, wherein at least one of the polymer materials is a barrier material. Typical barrier materials retard the transmission of chemicals through them, such as, by way of example and not limitation, water vapor or oxygen. Non-limiting examples of barrier materials are poly(ethylene 2,6-naphthalate) (PEN); PA; liquid crystalline polymers (LCP); ethylene vinyl alcohol (EVOH); or mixtures thereof. In another embodiment, the barrier material is a polymer material coated with a barrier coating. Non-limiting examples of barrier coatings are SiO₂; SiOₓ; Al₂O₃; AlOₓ; glass-like coating; diamond-like coating; metallic coating; carbon coating; or mixtures thereof. In another embodiment, the plastic bottle is coated with a barrier coating either externally or internally or both.

In one embodiment, the plastic bottle comprises a blend of PEF and one or more of the other polymer materials. In another embodiment, the plastic bottle comprises a blend of PEF and one or more barrier materials. In yet another embodiment, the plastic bottle comprises up to about 25 wt% recycled PET. In yet another embodiment, the plastic bottle comprises a blend of PEF and recycled PET with recycled PET being up to about 25 wt% of the plastic bottle weight. In even yet another embodiment, the plastic bottle comprises recycled PET is contained in a separate layer within the plastic bottle. In one embodiment, the plastic bottle of the present invention comprises recycled PEF. In another embodiment, the plastic bottle of the present invention comprises regrind PEF.

The benefits of PEF may be enhanced by blending various compounds that can scavenge various molecules, such as oxygen, moisture, etc. A non-limiting example of such a compound is farnesene, which can be used to scavenge oxygen. In one embodiment, the plastic bottle comprises PEF blended with farnesene.

In another embodiment, the plastic bottle is substantially clear. In yet another embodiment, the plastic bottle comprises one or more pigments or dyes. The pigments are incorporated into the bottle via a colorant masterbatch. As used herein, a "colorant masterbatch" refers to a mixture in which pigments are dispersed at high concentration in a carrier material. The colorant masterbatch is used to impart color to the final product. In some embodiments, the carrier material is a bio-based plastic or a petroleum-based plastic, while in alternative embodiments, the carrier is a bio-based oil or a petroleum-based oil. The carrier may also be a bio-based wax or a petroleum-based wax. The colorant masterbatch can be derived wholly or partly from a petroleum resource, wholly or partly from a renewable resource, or wholly or partly from a recycled resource. Non-limiting examples of the carrier material are bio-based or petroleum-based polyethylene (e.g., linear low-density polyethylene (LLDPE), low-density polyethylene (LDPE), high-density polyethylene (HDPE)), bio-based oil (e.g., olive oil, rapeseed oil, peanut oil, soybean oil, or hydrogenated plant-derived oils), bio-based wax (e.g.), petroleum-based oil, petroleum-based wax (e.g.), recycled oil, bio-based or petroleum-based PET, bio-based or petroleum-based polypropylene, or a mixture thereof. The pigment within the carrier material, which can be derived from either a renewable resource or a non-renewable resource, can include, by way of example and not limitation, an inorganic pigment, an organic pigment or dye, a polymeric resin, or a mixture thereof. Non-limiting examples of pigments are titanium dioxide (e.g., rutile or anatase), copper phthalocyanine, antimony oxide, zinc oxide, calcium carbonate, fumed silica, phthalocyamine (e.g., phthalocyamine blue), ultramarine blue, cobalt blue, monoazo pigments, diazo pigments, acid dye, base dye, quinacridone, and a mixture thereof. In some embodiments, the colorant masterbatch can further include one or more additives, which can either be derived from a renewable resource or a non-renewable resource. Non-limiting examples of the additives are slip agents, UV absorbers, nucleating agents, UV stabilizers, heat stabilizers, clarifying agents, fillers, brighteners, process aids, perfumes, flavors, or a mixture thereof.

In one embodiment, the plastic bottle further comprises a delivery device and a valve. The delivery device can be any known delivery device including, but not limited to, a button actuator and a porous sintered dome. The valve controls the flow of the perfume composition. Likewise, any known valve can be used that is capable of sealing the perfume composition within the plastic bottle and of being easily opened and closed to control the release of the perfume composition to the delivery device. Both the delivery device and valve can be made of any material including, but not limited to, metal, plastic, or glass. PEF may be used to produce a plastic valve that can be glued or welded to the plastic bottle instead of a typical metal valve.

In one embodiment, the plastic bottle further comprises a label. In another embodiment, the plastic bottle further comprises a label, wherein the label comporises PEF. In another embodiment, the plastic bottle further comprises a cap. In another embodiment, the plastic bottle further comprises a cap, wherein the cap comporises PEF.

In some embodiments, color can be imparted to the label, cap, delivery system, and valve of the present invention in any of the aspects by using direct compounding (i.e., in-line compounding). In these embodiments, a twin screw compounder is placed at the beginning of the injection molding, blow molding, or film line and additives, such as pigments, are blended into the resin just before article formation.

Additional materials may be incorporated into the plastic bottle, label, cap, delivery system, and valve of the present invention in any of the aspects to improve the strength or other physical characteristics of the plastic. Non-limiting examples of such additional materials are inorganic salt (e.g. calcium carbonate, calcium sulfate, talc, clay, and nanoclay), aluminum hydroxide, CaSiO₃, glass fibers, glass spheres, crystalline silicas (e.g., quartz, novacite, and crystallobite), magnesium hydroxide, mica, sodium sulfate, lithopone, magnesium carbonate, iron oxide, or mixtures thereof.

In one embodiment the plastic bottle, cap, and label are made from up to 50 wt% recycled PEF in a blend with PEF or other polymer materials. In another embodiment, the plastic bottle, cap, and label is made from up to 50 wt% recycled PEF in a multiple layer structure. In another embodiment, up to 100 wt% of the plastic bottle, cap, and label are made from recycled PEF.

PEF bottles can be recycled along with PET. Alternatively, a separate recycling stream can be set up for PEF only. It is desirable for plastic bottles for perfume compositions to be recyclable, particularly in North America and other developed countries, where substantial recycling infrastructure exists. For example, several States in the U.S. (e.g. California and Oregon) require consumer goods companies to make their bottles recyclable.

The bottles of the present invention can be produced using blow molding. Blow molding is a manufacturing process by which hollow plastic parts are formed from thermoplastic materials. The blow molding process begins with melting down the thermoplastic material and forming it into a parison or preform. The parison is a tube-like piece of plastic with a hole in one end through which compressed air can pass. Pressurized gas, usually air, is used to expand the parison or the hot preform and press it against a mold cavity. The pressure is held until the plastic cools. After the plastic has cooled and hardened the mold opens up and the part is ejected.

There are three main types of blow molding: extrusion blow molding (EBM), injection blow molding (IBM), and injection stretch blow molding (ISBM). In extrusion blow molding, a molten tube of plastic is extruded into a mold cavity and inflated with compressed air. One end of the cylinder is pinched closed. After the plastic part has cooled, it is removed from the mold. These containers can be single layer or multilayer.

Injection blow molding involves three steps: injection, blowing, and ejection. First, molten polymer is fed into a manifold where it is injected through nozzles into a hollow, heated preform mold. The preform mold forms the external shape of the resulting container and is clamped around a mandrel (the core rod), which forms the internal shape of the preform. The preform consists of a fully formed bottle / jar neck with a thick tube of polymer attached, which will form the body. The preform mold opens and the core rod is rotated and clamped into the hollow, chilled blow mold. The core rod opens and allows compressed air into the preform, which inflates it to the finished article shape. After a cooling period, the blow mold opens and the core rod is rotated to the ejection position. The finished article is stripped off the core rod and leak-tested. Injection blow molding, as well as the other blow molding methods described herein, is useful for the formation of article components that have embedded bio-based polymer. Injection blow molding can be used to produce containers that include blends of bio-based polymers.

Injection stretch blow molding is a method for producing a plastic bottle from a preform or parison that is stretched in both the hoop direction and the axial direction, when the preform is blown into its desired container shape. In the ISBM process, a plastic is first molded into a "preform" using the injection molding process. These preforms are produced with the necks of the containers, including threads. The preforms are packaged, and after cooling, fed into a reheat stretch blow molding machine. The preforms are heated above their glass transition temperature, then blown using high pressure air into bottles using metal blow molds. Typically, the preform is stretched with a core rod as part of the process. Injection stretch blow molding can be used to produce bottles of the present invention.

The label of the invention can be formed using film extrusion. In film extrusion, thermoplastic material is melted and formed into a continuous profile. In some embodiments, multilayer films are coextruded. Film extrusion and coextrusion can be performed by any method known to one skilled in the art. The film layers may be formed from a variety of materials, including PEF, PET, PP and PE. In one embodiment, the label comprises virgin PEF. In another embodiment, the label comprises recycled PEF. In yet another embodiment, the label comorises regrind PEF. In one embodiment, the label comprises other polymer material. The labels of the present invention may be applied using a pressure sensitive adhesive or using a shrink label.

The cap of the present invention can be formed using injection molding or thermoforming. Injection molding can be used to make single layer caps or multilayer caps. The cap may be formed from a variety of materials, including PEF, PET, PP and PE. In one embodiment, the cap is thermoformed and comprises virgin PEF. In another embodiment, the cap comprises recycled PEF. In yet another embodiment, the cap comprises regrind PEF. In one embodiment, the cap is thermoformed and comprises virgin PET. In another embodiment, the cap comprises recycled PET. In yet another embodiment, the cap comprises regrind PET. In one embodiment, the cap comprises other polymer material.

### III Perfume Compositions

The perfume composition of the present invention may comprise a perfume and a solvent. The perfume may be manufactured synthetically or extracted from plant or animal sources. The solvent may be ethanol, mixture of water and ethanol, fractionated coconut oil, or liquid waxes. In one embodiment, the solvent is ethanol or mixture of water and ethanol. In another embodiment, the solvent is ethanol.

The perfume composition of the present invention may comprise perfume of any type, such as, by way of example and not limitation, perfume extract, esprit de parfum (ESdP), eau de parfum (EdP), eau de toilette (EdT), eau de cologne (EdC), perfume mist, and splash (EdS). Also, the perfume composition of the present invention may comprise any combination of top, middle, and base fragrance notes. In addition, the perfume composition of the present invention can comprise individual components or mixtures from various "Fragrance Families" of the fragrance wheel described by Michael Edwards in Fragrances of the World 2013® 29th Edition, Sydney. In the fragrance wheel, the four standard families are Floral, Oriental, Woody and Fresh which are in turn divided into sub-groups (e.g. in the Floral Family: Floral, Soft Floral, Floral Oriental) and arranged in a circle, each group being related to the next. By way of example and not limitation, perfume compositions can comprise components or mixtures from families and sub-groups including single floral, floral bouquet, oriental, wood, leather, chypre, fougère, bright floral, green, aquatic, oceanic, ozonic, citrus, fruity, or gourmand. The perfume composition of the present invention can comprise components or mixtures from various natural sources, such as, by way of example and not limitation, bark, flowers, blossoms, fruits, leaves, twigs, resins, roots, rhizomes, bulbs, seeds, woods, ambergris, castoreum, civet, hyraceum, honeycomb, deer musk, lichens, seaweed, synthetic sources, or mixtures thereof.

In another embodiment, the perfume composition of the present invention may comprise components selected from the group consisting of monoterpenes, sesquiterpenes, diterpenes, their derivatives, and mixtures thereof. Non-limiting examples of monoterpenes and their derivatives are menthol, vanillin, citral alcohol, rose alcohol, and limonene. Non-limiting examples of sesquiterpenes and their derivatives are α- and β-santalol, patcoulol, and norpatchoulenol. A non-limiting example of diterpenes and their derivatives is sclareol. Other perfume compositions of the present invention may comprise perfumes described in U.S. Patent No. 5,919,752,.

### IV Test and Calculation Procedures

Barrier properties may be directly obtained via Water Vapor Transmission Rate (WVTR; ASTM F-1249) and Oxygen Transmission Rate (OTR; ASTM D3985) measurements.

Environmental Stress Crack Resistance is determined by placing ASTM Izod bars (ASTM D256-10) or Izod-size parts cut out of the panels of the bottles, under strain (0.25%, 0.5%, and 1%), in headspace or direct contact with product (for 1 month at 25°C or 40°C), followed by optical/SEM/TEM characterization. Creep Resistance is determined by placing ASTM Type V dogbones (ASTM D638-10), under stress (1390 psi), in headspace or direct product contact (for 1 week at 25°C or 40°C) and measuring dimensional change along the gauge length.

The bio-based content of a material is measured using the ASTM D6866 method, which allows the determination of the bio-based content of materials using radiocarbon analysis by accelerator mass spectrometry, liquid scintillation counting, and isotope mass spectrometry. When nitrogen in the atmosphere is struck by an ultraviolet light produced neutron, it loses a proton and forms carbon that has a molecular weight of 14, which is radioactive. This ¹⁴C is immediately oxidized into carbon dioxide, which represents a small, but measurable fraction of atmospheric carbon. Atmospheric carbon dioxide is cycled by green plants to make organic molecules during the process known as photosynthesis. The cycle is completed when the green plants or other forms of life metabolize the organic molecules producing carbon dioxide, which causes the release of carbon dioxide back to the atmosphere. Virtually all forms of life on Earth depend on this green plant production of organic molecules to produce the chemical energy that facilitates growth and reproduction. Therefore, the ¹⁴C that exists in the atmosphere becomes part of all life forms and their biological products. These renewably based organic molecules that biodegrade to carbon dioxide do not contribute to global warming because no net increase of carbon is emitted to the atmosphere. In contrast, fossil fuel-based carbon does not have the signature radiocarbon ratio of atmospheric carbon dioxide. *See* WO 2009/155086.

The application of ASTM D6866 to derive a "bio-based content" is built on the same concepts as radiocarbon dating, but without use of the age equations. The analysis is performed by deriving a ratio of the amount of radiocarbon (¹⁴C) in an unknown sample to that of a modern reference standard. The ratio is reported as a percentage with the units "pMC" (percent modern carbon). If the material being analyzed is a mixture of present day radiocarbon and fossil carbon (containing no radiocarbon), then the pMC value obtained correlates directly to the amount of biomass material present in the sample. The modern reference standard used in radiocarbon dating is a NIST (National Institute of Standards and Technology) standard with a known radiocarbon content equivalent approximately to the year AD 1950. The year AD 1950 was chosen because it represented a time prior to thermo-nuclear weapons testing, which introduced large amounts of excess radiocarbon into the atmosphere with each explosion (termed "bomb carbon"). The AD 1950 reference represents 100 pMC. "Bomb carbon" in the atmosphere reached almost twice normal levels in 1963 at the peak of testing and prior to the treaty halting the testing. Its distribution within the atmosphere has been approximated since its appearance, showing values that are greater than 100 pMC for plants and animals living since AD 1950. The distribution of bomb carbon has gradually decreased over time, with today's value being near 107.5 pMC. As a result, a fresh biomass material, such as corn, could result in a radiocarbon signature near 107.5 pMC.

Petroleum-based carbon does not have the signature radiocarbon ratio of atmospheric carbon dioxide. Research has noted that fossil fuels and petrochemicals have less than about 1 pMC, and typically less than about 0.1 pMC, for example, less than about 0.03 pMC. However, compounds derived entirely from renewable resources have at least about 95 percent modern carbon (pMC), preferably at least about 99 pMC, for example, about 100 pMC.

Combining fossil carbon with present day carbon into a material will result in a dilution of the present day pMC content. By presuming that 107.5 pMC represents present day biomass materials and 0 pMC represents petroleum derivatives, the measured pMC value for that material will reflect the proportions of the two component types. A material derived 100% from present day soybeans would give a radiocarbon signature near 107.5 pMC. If that material was diluted with 50% petroleum derivatives, it would give a radiocarbon signature near 54 pMC.

A bio-based content result is derived by assigning 100% equal to 107.5 pMC and 0% equal to 0 pMC. In this regard, a sample measuring 99 pMC will give an equivalent bio-based content result of 93%.

Assessment of the materials described herein was done in accordance with ASTM D6866, particularly with Method B. The mean values encompass an absolute range of 6% (plus and minus 3% on either side of the bio-based content value) to account for variations in end-component radiocarbon signatures. It is presumed that all materials are present day or fossil in origin and that the desired result is the amount of bio-component "present" in the material, not the amount of bio-material "used" in the manufacturing process.

Other techniques for assessing the bio-based content of materials are described in U.S. Patent Nos. 3,885155, 4,427,884, 4,973,841, 5,438,194, and 5,661,299, and WO 2009/155086.

For example, PEF contains eight carbon atoms in its monomeric unit. If PEF is totally derived from a renewable resource, then it theoretically has a bio-based content of 100%, because all of the carbon atoms are derived from a renewable resource. If only the aromatic portion of the monomeric unit of PEF is derived from a renewable resource, then it theoretically has a bio-based content of 75%.

The foregoing description is given for clearness of understanding only, and no unnecessary limitations should be understood therefrom, as modifications within the scope of the invention may be apparent to those having ordinary skill in the art.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

## Claims

1. A plastic bottle containing a perfume composition, wherein said plastic bottle comprises poly(ethylene 2,5-furandicarboxylate) (PEF).

2. The plastic bottle of any preceding claim, wherein said plastic bottle further comprises a delivery device and a valve.

3. The plastic bottle of any preceding claim, wherein said plastic bottle further comprises a label and said label comprises PEF.

4. The plastic bottle of any preceding claim, wherein said plastic bottle further comprises a cap and said cap comprises PEF.

5. The plastic bottle of any preceding claim, wherein said perfume composition comprises a component or mixture from fragrance families and sub-groups; and wherein said fragrance families and sub-groups are selected from the group consisting of single floral, floral bouquet, oriental, wood, leather, chypre, fougère, bright floral, green, aquatic, oceanic, ozonic, citrus, fruity, gourmand.

6. The plastic bottle of any preceding claim, wherein said perfume composition comprises a component from natural sources; and wherein said natural sources are selected from the group consisting of bark, flowers, blossoms, fruits, leaves, twigs, resins, roots, rhizomes, bulbs, seeds, woods, ambergris, castoreum, civet, hyraceum, honeycomb, deer musk, lichens, seaweed, synthetic sources, and mixtures thereof.

7. The plastic bottle of any preceding claim, wherein said perfume composition comprises components selected from the group consisting of monoterpenes, sesquiterpenes, diterpenes, their derivatives, and mixtures thereof.

8. The plastic bottle of any preceding claim, wherein said perfume composition comprises a solvent.

9. The plastic bottle of any preceding claim, wherein said solvent is ethanol.

10. The plastic bottle of any preceding claim, wherein said plastic bottle is substantially clear.

11. The plastic bottle of any preceding claim, wherein said plastic bottle further comprises a colored pigment or dye.

12. The plastic bottle of any preceding claim, wherein said plastic bottle comprises from about 10 wt% to 100 wt% bio-based content.

13. The plastic bottle of any preceding claim, wherein said PEF is blended with farnesene.

14. The plastic bottle of any preceding claim, wherein said plastic bottle comprises a blend of PEF and one or more other polymer materials; and wherein said other polymer materials are selected from the group consisting of poly(ethylene terephthalate) (PET); polyester; polyamide (PA); polycarbonate (PC); polyoxymethylene (POM); polyacrylonitrile (PAN); polyolefin; polyethylene (PE); polypropylene (PP); fluoropolymer; poly(butylene succinate) (PBS); virgin, recycled, and regrind versions of said other polymer materials; bio-based and petroleum-based versions of said other polymer materials; and mixtures thereof.

15. The plastic bottle of any preceding claim, wherein said plastic bottle comprises multiple layers of other polymer materials.

## Patentansprüche

1. Kunststoffflasche zum Enthalten einer Duftstoffzusammensetzung, wobei die Kunststoffflasche Poly(ethylen-2,5-furandicarboxylat) (PEF) umfasst.

2. Kunststoffflasche nach einem der vorstehenden Ansprüche, wobei die Kunststoffflasche ferner eine Ausgabevorrichtung und ein Ventil umfasst.

3. Kunststoffflasche nach einem der vorstehenden Ansprüche, wobei die Kunststoffflasche ferner ein Etikett umfasst und das Etikett PEF umfasst.

4. Kunststoffflasche nach einem der vorstehenden Ansprüche, wobei die Kunststoffflasche ferner einen Verschluss umfasst und der Verschluss PEF umfasst.

5. Kunststoffflasche nach einem der vorstehenden Ansprüche, wobei die Duftstoffzusammensetzung einen Bestandteil oder eine Mischung aus Duftstofffamilien und -untergruppen umfasst; und wobei die Duftstofffamilien und -untergruppen ausgewählt sind aus der Gruppe bestehend aus einzeln blumig, blumigem Bouquet, orientalisch, Holz, Leder, Chypre, Fougere, klar blumig, grün, aquatisch, ozeanisch, ozonisch, zitrus, fruchtig, gourmand.

6. Kunststoffflasche nach einem der vorstehenden Ansprüche, wobei die Duftstoffzusammensetzung einen Bestandteil aus natürlichen Quellen umfasst; und wobei die natürlichen Quellen ausgewählt sind aus der Gruppe bestehend aus Rinde, Blumen, Blüten, Früchten, Blättern, Zweigen, Harzen, Wurzeln, Rhizomen, Knollen, Samen, Hölzern, Amber, Bibergeil, Zibet, Hyraceum, Honigwabe, Hirschmoschus, Flechte, Meeresalge, synthetischen Quellen und Mischungen davon.

7. Kunststoffflasche nach einem der vorstehenden Ansprüche, wobei die Duftstoffzusammensetzung Bestandteile umfasst, die ausgewählt sind aus der Gruppe bestehend aus Monoterpenen, Sesquiterpenen, Diterpenen, deren Derivaten und Mischungen davon.

8. Kunststoffflasche nach einem der vorstehenden Ansprüche, wobei die Duftstoffzusammensetzung ein Lösungsmittel umfasst.

9. Kunststoffflasche nach einem der vorstehenden Ansprüche, wobei es sich bei dem Lösungsmittel um Ethanol handelt.

10. Kunststoffflasche nach einem der vorstehenden Ansprüche, wobei die Kunststoffflasche im Wesentlichen durchsichtig ist.

11. Kunststoffflasche nach einem der vorstehenden Ansprüche, wobei die Kunststoffflasche ferner ein Farbpigment oder einen Farbstoff umfasst.

12. Kunststoffflasche nach einem der vorstehenden Ansprüche, wobei die Kunststoffflasche von etwa 10 Gew.-% bis 100 Gew.-% Inhalt auf biologischer Basis umfasst.

13. Kunststoffflasche nach einem der vorstehenden Ansprüche, wobei das PEF mit Farnesen gemischt ist.

14. Kunststoffflasche nach einem der vorstehenden Ansprüche, wobei die Kunststoffflasche eine Mischung aus PEF und einem oder mehreren anderen Polymermaterialien umfasst; und wobei die anderen Polymermaterialien ausgewählt sind aus der Gruppe bestehend aus Poly(ethylenterephthalat) (PET); Polyester; Polyamid (PA); Polycarbonat (PC); Polyoxymethylen (POM); Polyacrylnitril (PAN); Polyolefin; Polyethylen (PE); Polypropylen (PP); Fluorpolymer; Poly(butylensuccinat) (PBS); naturbelassenen, zurückgeführten und wiedervermahlenen Versionen der anderen Polymermaterialien; Versionen der anderen Polymermaterialien auf biologischer Basis oder auf Petroleumbasis; und Mischungen davon.

15. Kunststoffflasche nach einem der vorstehenden Ansprüche, wobei die Kunststoffflasche mehrere Schichten aus anderen Polymermaterialien umfasst.

## Revendications

1. Bouteille en plastique pour contenir une composition parfumée, où ladite bouteille en plastique comprend du poly(éthylène 2,5-furane-dicarboxylate) (PEF).

2. Bouteille en plastique selon une quelconque revendication précédente, où ladite bouteille en plastique comprend en outre un dispositif de libération et une valve.

3. Bouteille en plastique selon une quelconque revendication précédente, où ladite bouteille en plastique comprend en outre une étiquette et ladite étiquette comprend du PEF.

4. Bouteille en plastique selon une quelconque revendication précédente, où ladite bouteille en plastique comprend en outre une coiffe et ladite coiffe comprend du PEF.

5. Bouteille en plastique selon une quelconque revendication précédente, dans laquelle ladite composition parfumée comprend un composant ou mélange provenant de familles et sous-groupes de parfums ; et dans laquelle lesdites familles et lesdits sous-groupes de parfums sont choisis dans le groupe constitué de floral simple, bouquet floral, oriental, bois, cuir, chypre, fougère, floral intense, vert, aquatique, océanique, ozoné, agrume, fruité, gourmand.

6. Bouteille en plastique selon une quelconque revendication précédente, dans laquelle ladite composition parfumée comprend un composant provenant de sources naturelles ; et dans laquelle lesdites sources naturelles sont choisies dans le groupe constitué d'écorce d'arbre, fleurs, floraisons, fruits, feuilles, brindilles, résines, racines, rhizomes, bulbes, graines, bois, ambre gris, castoréum, civette, hyraceum, nid d'abeilles, musc de cerf, lichens, algue, sources synthétiques, et leurs mélanges.

7. Bouteille en plastique selon une quelconque revendication précédente, dans laquelle ladite composition parfumée comprend des composants choisis dans le groupe constitué de monoterpènes, sesquiterpènes, diterpènes, leurs dérivés, et leurs mélanges.

8. Bouteille en plastique selon une quelconque revendication précédente, dans laquelle ladite composition parfumée comprend un solvant.

9. Bouteille en plastique selon une quelconque revendication précédente, dans laquelle ledit solvant est l'éthanol.

10. Bouteille en plastique selon une quelconque revendication précédente, où ladite bouteille en plastique est essentiellement transparente.

11. Bouteille en plastique selon une quelconque revendication précédente, où ladite bouteille en plastique comprend en outre un pigment coloré ou une teinture.

12. Bouteille en plastique selon une quelconque revendication précédente, où ladite bouteille en plastique comprend d'environ 10 % en poids à 100 % en poids de contenu d'origine biologique.

13. Bouteille en plastique selon une quelconque revendication précédente, dans laquelle ledit PEF est mélangé à du farnésène.

14. Bouteille en plastique selon une quelconque revendication précédente, où ladite bouteille en plastique comprend un mélange de PEF et d'un ou plusieurs autres matériaux polymères ; et dans laquelle lesdits autres matériaux polymères sont choisis dans le groupe constitué de poly(éthylène téréphtalate) (PET) ; polyester ; polyamide (PA) ; polycarbonate (PC) ; polyoxyméthylène (POM) ; polyacrylonitrile (PAN) ; polyoléfine ; polyéthylène (PE) ; polypropylène (PP) ; fluoropolymère ; poly(succinate de butylène) (PBS) ; versions vierges, recyclées et rebroyées desdits autres matériaux polymères ; versions d'origine biologique et à base de pétrole desdits autres matériaux polymères ; et leurs mélanges.

15. Bouteille en plastique selon une quelconque revendication précédente, où ladite bouteille en plastique comprend plusieurs couches d'autres matériaux polymères.
